# EUROPÄISCHE PATENTANMELDUNG

(11) **EP 3 171 197 A2**
(43) Veröffentlichungstag der Anmeldung: **24.05.2017**
(21) Anmeldenummer: 16199664.0
(22) Anmeldetag: 18.11.2016
(51) Int. Cl.: G01S 7/03, H01Q 1/32, H01Q 19/06, G01S 7/02

(54) **SENSORANORDNUNG**

(30) Priorität: 23.11.2015 DE 102015015034
(71) Anmelder: BAUMER ELECTRIC AG, 8500 Frauenfeld (CH)
(72) Erfinder: Schwendimann, Herr Mathias, 8212 Neuhausen (CH); Kunz, Valentin, 8404 Winterthur (CH)
(74) Vertreter: Strauss, Steffen

(57) **Zusammenfassung**

Die Erfindung betrifft eine Sensoranordnung, mit einem Gehäuse mit einer umlaufenden Gehäusewandung, welche eine Gehäuseöffnung begrenzt, einer Sensorplatine mit einem Hochfrequenzsensor, wobei die Sensorplatine in dem Gehäuse derart angeordnet ist, dass der Hochfrequenzsensor zu der Gehäuseöffnung hin ausgerichtet ist, einer einteiligen Verschlusskappe zum Verschließen des Gehäuses, wobei die einteilige Verschlusskappe eine umlaufende Kappenwandung und eine Hochfrequenzlinse aufweist, wobei die Hochfrequenzlinse die umlaufende Kappenwandung stirnseitig abschließt und zu der Gehäuseöffnung hin ausgerichtet ist und wobei ein Abstand zwischen der Hochfrequenzlinse und dem Hochfrequenzsensor und damit eine Brennweite durch eine seitliche Länge der Kappenwandung vorgegeben ist.

## Beschreibung

Die vorliegende Erfindung betrifft eine Sensoranordnung.

Radarsensoren können zur Detektion eines entfernten Objekts sowie zur Messung einer Entfernung und einer Geschwindigkeit des Objekts eingesetzt werden. Die Messung erfolgt dabei meist mittels einer Emission von Radarstrahlung in Richtung des Objekts und einer Erfassung einer Reflektion der Radarstrahlung an dem Objekt.

Radarsensoren umfassen in der Regel ein Radarsensorelement, welches auf einer elektrischen Leiterplatte angeordnet ist, wobei die Leiterplatte meist von einem lichtundurchlässigen Sensorgehäuse umgeben ist. Eine genaue Ausrichtung des Radarsensorelements auf ein entferntes Objekt ist aufgrund der Lichtundurchlässigkeit des Gehäuses und möglichen Unregelmäßigkeiten bei der Positionierung des Radarsensorelements in dem Gehäuse jedoch schwierig.

Aus der DE 10 2012 20 29 13 A1 ist ein Radarsensor bekannt, bei dem eine Brennweite durch das Sensorgehäuse und der Linse bestimmt ist. Eine Genauigkeit der Brennweite ist ferner abhängig von der Toleranz des Gehäuses und der Einschraubtiefe der Linse sowie der Befestigung der Sensorplatine.

Es ist die der Erfindung zugrundeliegende Aufgabe eine effiziente Sensoranordnung zu schaffen, welche auf einfache Weise herstellbar ist.

Diese Aufgabe wird durch die Merkmale der unabhängigen Ansprüche gelöst. Vorteilhafte Weiterbildungsformen sind Gegenstand der abhängigen Patentansprüche der Beschreibung sowie der Zeichnungen.

Gemäß einem ersten Aspekt betrifft die Erfindung eine Sensoranordnung, mit einem Gehäuse mit einer umlaufenden Gehäusewandung, welche eine Gehäuseöffnung begrenzt, einer Sensorplatine mit einem Hochfrequenzsensor, wobei die Sensorplatine in dem Gehäuse derart angeordnet ist, dass der Hochfrequenzsensor zu der Gehäuseöffnung hin ausgerichtet ist, einer einteiligen Verschlusskappe zum Verschließen des Gehäuses, wobei die einteilige Verschlusskappe eine umlaufende Kappenwandung und eine Hochfrequenzlinse aufweist, wobei die Hochfrequenzlinse die umlaufende Kappenwandung stirnseitig abschließt und zu der Gehäuseöffnung hin ausgerichtet ist und ein Abstand zwischen der Hochfrequenzlinse und dem Hochfrequenzsensor durch eine seitliche Länge der Kappenwandung vorgegeben ist.

Die Brennweite wird damit in vorteilhafter Weise durch den Abstand der seitlichen Länge der Kappenwandung vorgegeben. Die gewünschte Brennweite, die durch den Abstand zwischen der Hochfrequenzlinse und dem Hochfrequenzsensor bestimmt wird, definiert die seitliche Länge der Kappenwandung. Die seitliche Länge der Kappenwandung erstreckt sich von dem der Hochfrequenzlinse abgewandten Kappenwandungsrand bis zu dem stirnseitigen Abschluss der Hochfrequenzlinse an der umlaufenden Kappenwandung.

Dadurch wird der Vorteil erreicht, dass die Hochfrequenzlinse das Hochfrequenzsignal effizient in Richtung des Hochfrequenzsensors fokussieren kann. Zudem kann der Sensor in einfacher Weise hergestellt werden. Durch die vorteilhafte Variation der seitlichen Länge der Kappenwandung können Sensoranordnungen der vorliegenden Anmeldung auf einfache Weise realisiert werden.

Ein weiterer Vorteil ergibt sich in einer größeren Fertigungstoleranz der Einzelteile der Sensoranordnung

Das Gehäuse kann einen runden Querschnitt aufweisen. Das Gehäuse kann einen Flansch oder ein Außengewinde zur Befestigung der Sensoranordnung umfassen. Ferner kann das Gehäuse auf der der Gehäuseöffnung abgewandten Seite eine Verjüngung des Gehäusedurchmessers aufweisen. Die Verjüngung kann einen elektrischen Anschluss, insbesondere eine elektrische Steckverbindung, zum Anschließen einer Leitungsanordnung aufweisen oder als elektrisches Anschlusselement ausgebildet sein.

Die Gehäusewandung kann aus einem elektrisch leitenden oder elektrisch isolierenden Material, beispielsweise einem Kunststoffmaterial, gebildet sein.

Die Sensorplatine kann eine elektrische Leiterplatte, beispielsweise eine Leiterplatte aus einem Substrat mit einer Flexprint-Beschichtung, sein. Die Sensorplatine kann an einer weiteren Leiterplatte angeschlossen sein. Die weitere Leiterplatte kann in dem Gehäuse längs zu der Gehäusewandung angeordnet sein, und die Sensorplatine mit dem elektrischen Anschluss an der der Gehäuseöffnung abgewandten Seite des Gehäuses verbinden, insbesondere elektrisch verbinden. Die weitere Leiterplatte kann elektronische Komponenten zum Ansteuern und Auslesen des Hochfrequenzsensors, sowie zu dessen Energieversorgung aufweisen.

Der Hochfrequenzsensor kann zum Aussenden und Empfangen von Hochfrequenzstrahlung, insbesondre Radarstrahlung ausgebildet sein. Der Hochfrequenzsensor kann ein Sendeelement zum Aussenden der Hochfrequenzstrahlung und ein Empfangselement zum Empfangen der Hochfrequenzstrahlung umfassen. Die Hochfrequenzstrahlung kann eine Frequenz von 121 GHz oder 61 GHz aufweisen.

Gemäß einer Ausführungsform positioniert und fixiert die umlaufende Kappenwandung mit einem der Hochfrequenzlinse abgewandten Kappenwandungsrand die Sensorplatine in dem Gehäuse. Dadurch wird der Vorteil erreicht, dass die Sensorplatine effizient in der Sensoranordnung in festem Abstand und Winkel zur Hochfrequenzlinse fixiert werden kann.

Gemäß einer weiteren Ausführungsform weist der der Hochfrequenzlinse abgewandte Kappenwandungsrand voneinander beabstandete, noppenförmig ausgebildete Verlängerungen auf.

Gemäß einer Ausführungsform umfasst das Gehäuse einen umlaufenden Vorsprung für die Aufnahme der Sensorplatine quer zu einer Erstreckungsrichtung des Gehäuses oder parallel zu der Gehäuseöffnung, wobei zwischen dem umlaufenden Vorsprung und der Sensorplatine eine elastische Dichtlippe, insbesondere ein elastischer Dichtring, angeordnet ist. Dadurch wird der Vorteil erreicht, dass die Sensorplatine effizient in der Sensoranordnung fixiert werden kann. Mit der elastischen Dichtlippe können Unregelmäßigkeiten in der Beabstandung des Gehäuses, der Verschlusskappe und der Sensorplatine ausgeglichen werden und somit höhere Fertigungstoleranzen der Sensoranordnung erreicht werden.

Die elastische Dichtlippe bzw. der elastische Dichtring kann ein O-Ring sein.

Gemäß einer Ausführungsform ist zwischen der umlaufenden Kappenwandung und der Gehäusewandung eine Dichtlippe angeordnet. Die Dichtlippe kann ein weiterer elastischer Dichtring, insbesondere ein weiterer O-Ring sein. Dadurch wird der Vorteil erreicht, dass ein effizientes und dichtes, insbesondere wasser- und/oder luftdichtes, Verschließen des Gehäuses mit der Verschlusskappe ermöglicht wird.

Gemäß einer Ausführungsform ist in der umlaufenden Kappenwandung eine umlaufende Nut gebildet, wobei die Dichtlippe in der umlaufenden Nut angeordnet ist, oder ist in der Gehäusewandung eine umlaufende Nut gebildet, wobei die Dichtlippe in der umlaufenden Nut angeordnet ist. Dadurch wird der Vorteil erreicht, dass die Dichtlippe effizient zwischen Kappenwandung und Gehäusewandung angeordnet werden kann.
Gemäß einer Ausführungsform ist die einteilige Verschlusskappe mit dem Gehäuse kraftschlüssig, insbesondere mittels eines Gewindeeingriffs, oder formschlüssig, insbesondere mittels einer Rastverbindung, verbunden. Dadurch wird der Vorteil erreicht, dass eine effiziente und stabile Anbringung der Verschlusskappe an dem Gehäuse erfolgen kann.

Gemäß einer Ausführungsform weist die umlaufende Kappenwandung ein Außengewinde auf, wobei die Gehäusewandung ein Innengewinde aufweist, und wobei die Kappenwandung in die Gehäusewandung eingeschraubt ist. Dadurch wird der Vorteil erreicht, dass eine effiziente und stabile Anbringung der Verschlusskappe an dem Gehäuse erfolgen kann.

Gemäß einer Ausführungsform ist die einteilige Verschlusskappe einteilig aus Kunststoff gebildet. Die Verschlussklappe kann aus einem Polyamid-Kunststoff gebildet sein. Ferner kann die Verschlussklappe mittels eines Spritzgussverfahrens oder eines Drehverfahrens gefertigt sein.

Gemäß einer Ausführungsform ist die Hochfrequenzlinse geformt, ein Hochfrequenzsignal in Richtung des Hochfrequenzsensors zu fokussieren. Dadurch wird der Vorteil erreicht, dass der Hochfrequenzsensor das Hochfrequenzsignal effizient erfassen kann.

Gemäß einer Ausführungsform ist das Gehäuse hülsenförmig geformt, wobei die Sensorplatine quer zu einer Längsrichtung des Gehäuses angeordnet ist.

Die einteilige Verschlusskappe kann transluszent oder lichttransparent ausgebildet sein. In einer dieser Ausführungsform der einteiligen Verschlusskappe kann zumindest eine farbige LED zur optischen Anzeige eines Betriebszustandes der Sensoranordnung vorgesehen sein, die bei der mit der Verschlusskappe verschlossenen Sensoranordnung durch die transluszente oder lichttransparente Verschlusskappe sichtbar den Betriebszustand der Sensoranordnung anzeigt. In einer weiteren Ausführungsform kann die Sensoranordnung eine Laserjustierhilfe aufweisen, welche analog der zumindest einen farbigen LED durch die transluszente oder lichttransparente Verschlusskappe sichtbar ist. Vorzugsweise weist die Sensorplatine die zumindest eine farbige LED und/oder die Laserjustierhilfe auf.

Dadurch wird der Vorteil erreicht, dass die zumindest eine farbige LED und/oder Laserjustierhilfe durch die transluszente oder lichttransparente Verschlusskappe sichtbar ist.

Gemäß einer Ausführungsform erstreckt sich die Hochfrequenzlinse von der umlaufenden Kappenwandung sphärisch nach außen. Dadurch wird der Vorteil erreicht, dass die Hochfrequenzlinse das Hochfrequenzsignal effizient in Richtung des Hochfrequenzsensors fokussieren kann.

Gemäß einer Ausführungsform ist die umlaufende Kappenwandung hülsenförmig.

Gemäß einer Ausführungsform ist die umlaufende Kappenwandung zumindest teilweise durch einen umlaufenden Wandungskragen umgeben, wobei die Gehäusewandung zwischen dem umlaufenden Wandungskragen und der Kappenwandung aufgenommen ist. Dadurch wird der Vorteil erreicht, dass eine effiziente Anbringung der Verschlusskappe an dem Gehäuse erfolgen kann.

Ausführungsbeispiele der Erfindung sind in den Zeichnungen dargestellt und werden im Folgenden näher beschrieben.

Es zeigen:
- Fig. 1: eine Querschnittsansicht einer Sensoranordnung;
- Fig. 2: eine Querschnittsansicht einer Sensoranordnung;
- Fig. 3: eine schematische Darstellung einer Sensoranordnung; und
- Fig. 4: eine Querschnittsansicht einer einteiligen Verschlusskappe einer Sensoranordnung.

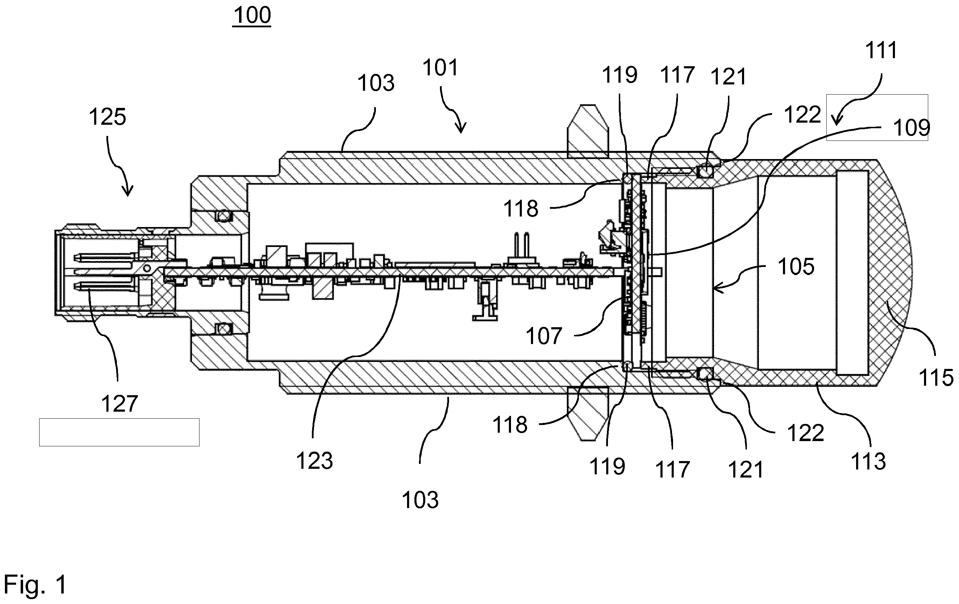

Fig. 1 zeigt eine Querschnittsansicht einer Sensoranordnung 100 gemäß einer Ausführungsform.

Die Sensoranordnung 100 umfasst ein Gehäuse 101 mit einer umlaufenden Gehäusewandung 103, welche eine Gehäuseöffnung 105 begrenzt, eine Sensorplatine 107 mit einem Hochfrequenzsensor 109, wobei die Sensorplatine 107 in dem Gehäuse 101 derart angeordnet ist, dass der Hochfrequenzsensor 109 zu der Gehäuseöffnung 105 hin ausgerichtet ist, einer einteiligen Verschlusskappe 111 zum Verschließen des Gehäuses 101, wobei die einteilige Verschlusskappe 111 eine umlaufende Kappenwandung 113 und eine Hochfrequenzlinse 115 aufweist, wobei die Hochfrequenzlinse 115 die umlaufende Kappenwandung 113 stirnseitig abschließt und zu der Gehäuseöffnung 105 hin ausgerichtet ist.

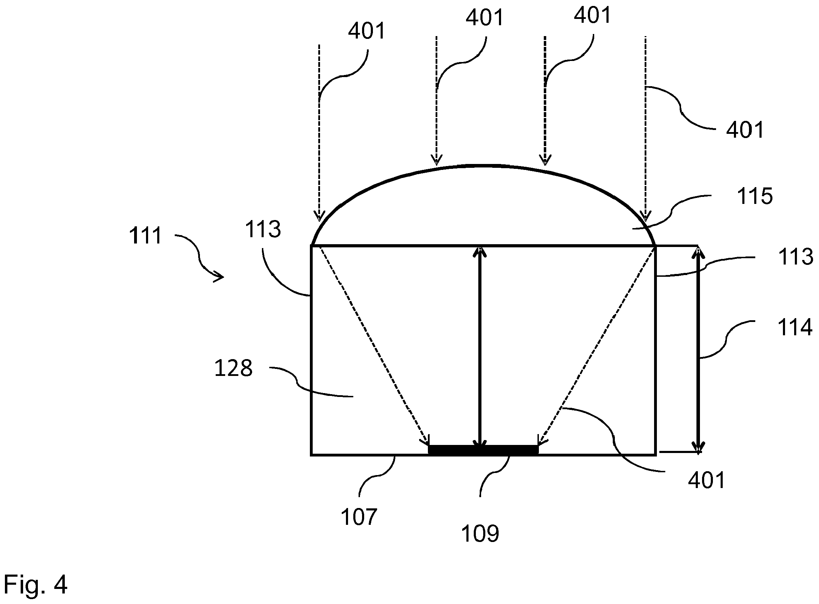

Ein Abstand zwischen der Hochfrequenzlinse 115 und dem Hochfrequenzsensor 109 ist durch eine seitliche Länge 114 (Fig. 4) der Kappenwandung 113 vorgegeben.

Das Gehäuse 101 kann einen runden Querschnitt aufweisen. Das Gehäuse 101 kann einen Flansch oder ein Außengewinde zur Befestigung der Sensoranordnung 100 umfassen. Ferner kann das Gehäuse 101 auf der der Gehäuseöffnung 105 abgewandten Seite eine Verjüngung 125 des Gehäusedurchmessers aufweisen. Die Verjüngung 125 kann einen elektrischen Anschluss 127, insbesondere eine elektrische Steckverbindung, zum Anschließen einer Leitungsanordnung aufweisen oder als elektrisches Anschlusselement ausgebildet sein.

Die Gehäusewandung 103 kann aus einem elektrisch leitenden oder elektrisch isolierenden Material, beispielsweise einem Kunststoffmaterial, gebildet sein.

Die Sensorplatine 107 kann eine elektrische Leiterplatte, beispielsweise eine Leiterplatte aus einem Substrat mit einer Flexprint-Beschichtung, sein. Die Sensorplatine 107 kann an einer weiteren Leiterplatte 123 angeschlossen sein. Die weitere Leiterplatte 123 kann in dem Gehäuse 101 längs zu der Gehäusewandung angeordnet sein, und die Sensorplatine 107 mit dem elektrischen Anschluss 127 an der der der Gehäuseöffnung 105 abgewandten Seite des Gehäuses 101 verbinden, insbesondere elektrisch verbinden. Die weitere Leiterplatte 123 kann elektronische Komponenten zum Ansteuern und Auslesen des Hochfrequenzsensors 109, sowie zu dessen Energieversorgung aufweisen. Der Hochfrequenzsensor 109 kann zum Aussenden und Empfangen von Hochfrequenzstrahlung, insbesondre Radarstrahlung ausgebildet sein. Der Hochfrequenzsensor 109 kann ein Sendeelement zum Aussenden der Hochfrequenzstrahlung und ein Empfangselement zum Empfangen der Hochfrequenzstrahlung umfassen. Die Hochfrequenzstrahlung kann eine Frequenz von 121 GHz oder 61 GHz aufweisen.

Das Gehäuse 101 kann einen umlaufenden Vorsprung 118 für die Aufnahme der Sensorplatine 107 aufweisen. Die Sensorplatine 107 kann dabei quer zu einer Erstreckungsrichtung des Gehäuses 101 und/oder parallel zu der Gehäuseöffnung 105 angeordnet sein.

Die umlaufende Kappenwandung 113 kann einen Kappenwandungsrand 117 auf der der Hochfrequenzlinse 115 abgewandten Seite der einteiligen Verschlusskappe 111 aufweisen. Die Sensorplatine 107 kann zwischen dem Kappenwandungsrand 117 der umlaufenden Kappenwandung 113 und dem umlaufenden Vorsprung 118 des Gehäuses 101 fixiert werden. Die Sensorplatine 107 kann dabei in einem festen Abstand zur Hochfrequenzlinse 115 fixiert werden.

Zwischen dem umlaufenden Vorsprung 118 und der Sensorplatine kann eine elastische Dichtlippe 119, insbesondere ein elastischer Dichtring, angeordnet sein. Mit der elastischen Dichtlippe können Unregelmäßigkeiten in der Beabstandung des Gehäuses 101, der einteiligen Verschlusskappe 111 und der Sensorplatine 107 ausgeglichen werden und somit höhere Fertigungstoleranzen der Sensoranordnung 100 erzielt werden.

Die elastische Dichtlippe 119 bzw. der elastische Dichtring kann ein O-Ring sein.

Gemäß einer Ausführungsform der Sensoranordnung 100 ist zwischen der umlaufenden Kappenwandung 113 und der Gehäusewandung 103 eine weitere Dichtlippe 121 angeordnet. Zur Aufnahme der weiteren Dichtlippe 121 kann eine umlaufende Nut in der umlaufenden Kappenwandung 113 und/oder in der Gehäusewandung 103 gebildet sein. Die weitere Dichtlippe 121 kann in der umlaufenden Nut angeordnet sein.

Die weitere Dichtlippe 121 kann ein weiterer elastischer Dichtring, insbesondere ein weiterer O-Ring sein. Mit der weiteren Dichtlippe 121 kann ein wasser- und/oder luftdichtes Verschließen des Gehäuses 101 mit der einteiligen Verschlusskappe 111 ermöglicht werden.

Gemäß einer Ausführungsform ist die einteilige Verschlusskappe 111 mit dem Gehäuse 101 kraftschlüssig, insbesondere mittels eines Gewindeeingriffs, oder formschlüssig, insbesondere mittels einer Rastverbindung, verbunden.

Die umlaufende Kappenwandung 113 kann ein Außengewinde und die Gehäusewandung 103 ein Innengewinde aufweisen. Die Kappenwandung 113 kann in die Gehäusewandung 103 eingeschraubt sein.

Ferner kann die umlaufende Kappenwandung 113 zumindest teilweise durch einen umlaufenden Wandungskragen 122 umgeben sein, wobei die Gehäusewandung zwischen dem umlaufenden Wandungskragen 122 und der Kappenwandung 113 aufgenommen ist.

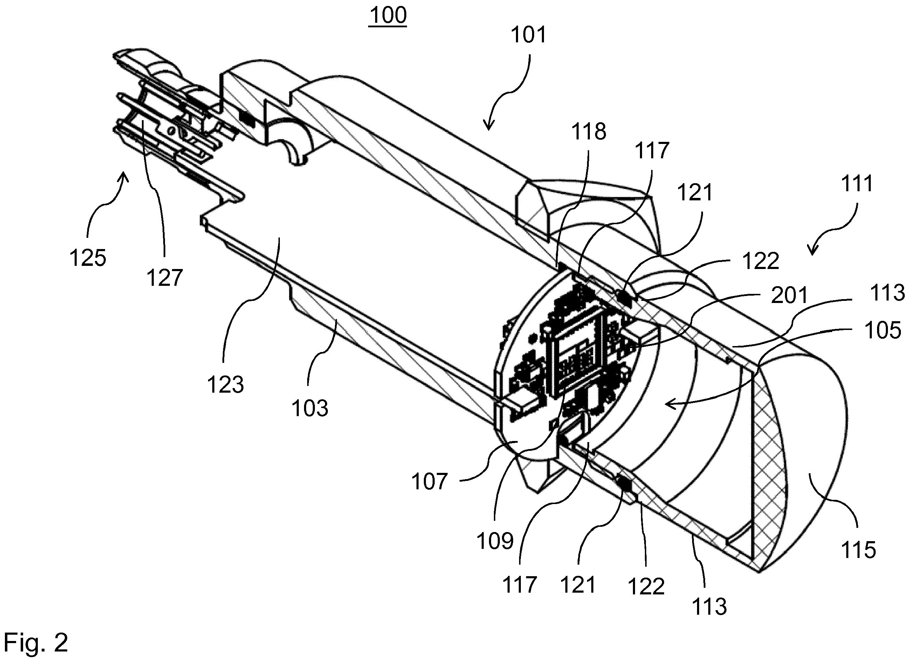

Fig. 2 zeigt eine Querschnittsansicht der Sensoranordnung 100 gemäß einer Ausführungsform.

Die Sensorplatine 107 ist in Fig. 2 parallel zu der Gehäuseöffnung 105 und quer zu der Erstreckungsrichtung des Gehäuses 101 angeordnet. Der der Hochfrequenzsensor 109 ist in Fig. 2 mittig in der Sensorplatine 107 angeordnet und ist zu der Gehäuseöffnung 105 hin ausgerichtet.

Die Sensorplatine 107 kann neben dem Hochfrequenzsensor 109 zumindest eine farbige LED 201 aufweisen. Die farbige LED 201 kann ausgebildet sein, einen Betriebszustand der Sensoranordnung 100 optisch anzuzeigen. Ferner kann die Sensorplatine 107 Justagemarken, insbesondere Laserjustierhilfen (nicht dargestellt), aufweisen.

Die einteilige Verschlusskappe 111 kann transluszent oder lichttransparent sein. Somit können die zumindest eine farbige LED 201 und/oder die Laserjustierhilfen bei einer mit der Verschlusskappe 111 verschlossenen Sensoranordnung 100 durch die transparente Verschlusskappe 111 sichtbar sein. Dies kann eine Justierung, insbesondere eine Laserjustierung, der mit der Verschlusskappe 111 verschlossenen Sensoranordnung 100 mit Hilfe der Laserjustierhilfen ermöglichen. Zudem kann eine Überprüfung des von der farbigen LED 201 angezeigten Betriebszustandes der verschlossenen Sensoranordnung 100 erfolgen.

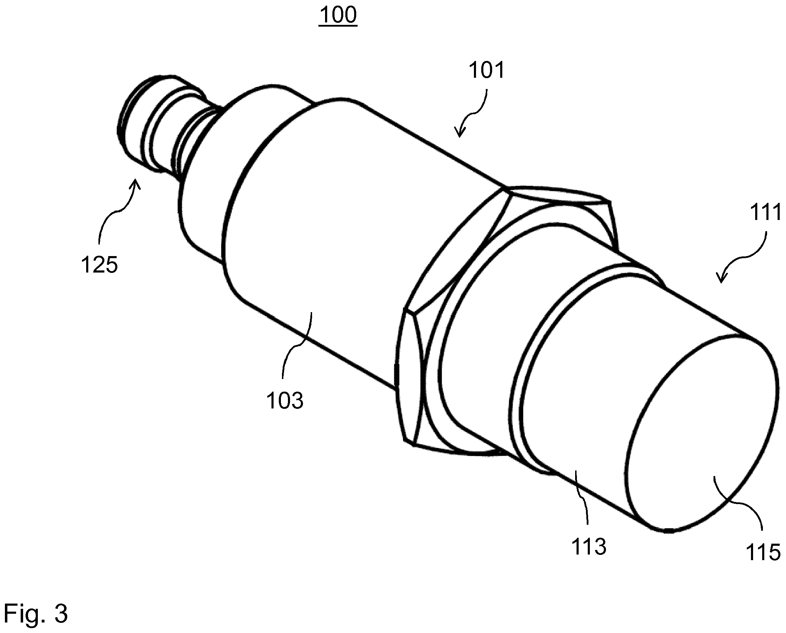

Fig. 3 zeigt eine schematische Darstellung der Sensoranordnung 100 gemäß einer Ausführungsform.

Das Gehäuse 101 und/oder die Verschlusskappe 111 können einen runden Querschnitt aufweisen. Ferner können das Gehäuse 100 bzw. die Gehäusewandung 103 und/oder die Verschlusskappe 111 bzw. die umlaufende Kappenwandung 113 hülsenförmig sein.

Die einteilige Verschlusskappe 111 kann aus einem transluzenten Material gebildet sein. Die einteilige Verschlusskappe 111 kann einteilig aus Kunststoff, insbesondere einem teiltransparenten Kunststoff, gebildet sein. Die Verschlusskappe 111 kann aus einem Polyamid-Kunststoff gebildet sein. Die Verschlussklappe 111 kann mittels eines Spritzgussverfahrens oder eines Drehverfahrens gefertigt sein.

Das Gehäuse 101 und die Verschlusskappe 111 können aus dem gleichen Material gebildet sein.

Gemäß einer Ausführungsform ist die Sensoranordnung 100 wasser- und/oder luftdicht.

Fig. 4 zeigt eine Querschnittsansicht der einteiligen Verschlusskappe 111 der Sensoranordnung 100 gemäß einer Ausführungsform.

Die einteiligen Verschlusskappe 111 zum Verschließen des Gehäuses 101, weist eine umlaufende Kappenwandung 113 und eine Hochfrequenzlinse 115 auf, wobei die Hochfrequenzlinse 115 die umlaufende Kappenwandung 113 stirnseitig abschließt und zu der Gehäuseöffnung 105 hin ausgerichtet ist.

Ein Abstand zwischen der Hochfrequenzlinse 115 und dem Hochfrequenzsensor 109 ist durch eine seitliche Länge 114 (Fig. 4) der Kappenwandung 113 vorgegeben.

Die Brennweite 128 wird damit in vorteilhafter Weise durch den Abstand der seitlichen Länge 114 der Kappenwandung 113 vorgegeben. Die gewünschte Brennweite 128, die durch den Abstand zwischen der Hochfrequenzlinse 115 und dem Hochfrequenzsensor 109 bestimmt wird, definiert die seitliche Länge 114 der Kappenwandung 113. Die seitliche Länge 114 der Kappenwandung 113 erstreckt sich von dem der Hochfrequenzlinse abgewandten Kappenwandungsrand 117 bis zu dem stirnseitigen Abschluss der Hochfrequenzlinse an der umlaufenden Kappenwandung 113.

Die Hochfrequenzlinse 115 erstreckt sich in Fig. 4 von der umlaufenden Kappenwandung 113 sphärisch nach außen. Dabei ist die Hochfrequenzlinse im Abstand ihrer Brennweite 128 zum Hochfrequenzsensor 109 angeordnet.

Die Hochfrequenzlinse 115 kann ein einstrahlendes Hochfrequenzsignal 401 auf den Hochfrequenzsensors fokussieren. Durch die Fokussierung kann eine Signalstärke, insbesondere eine Signalintensität oder eine Amplitude, des auf den Hochfrequenzsensor 109 einstrahlenden Hochfrequenzsignals 401 erhöht werden, wodurch ein Detektionssignal des Hochfrequenzsensors 109 erhöht werden kann.

Gemäß einer Ausführungsform ist die Hochfrequenzlinse 115 geformt, ein weiteres Hochfrequenzsignal, welches von dem Hochfrequenzsensor 109 ausgesendet wird auszurichten, insbesondere parallel auszurichten.

Das Hochfrequenzsignal 401 kann eine Reflexion des ausgesendeten weiteren Hochfrequenzsignals an einem Objekt sein. Die Sensoranordnung 100 kann ausgebildet sein, auf der Basis einer Laufzeit zwischen einem Aussenden des weiteren Hochfrequenzsignals und einem Empfangen des Hochfrequenzsignals 401 einen Abstand des Objekts zu der Sensoranordnung 100 zu erfassen. Ferner kann die Sensoranordnung 100 ausgebildet sein, auf der Basis eines Frequenzunterschieds zwischen dem Hochfrequenzsignal 401 und dem weiteren Hochfrequenzsignals eine Geschwindigkeit des Objekts zu erfassen.

Durch das Ausrichten des weiteren Hochfrequenzsignals und/oder das Fokussieren des Hochfrequenzsignals 401 mit der Hochfrequenzlinse 115 kann eine Detektionsreichweite der Sensoranordnung 100 erhöht werden.

Die Hochfrequenzlinse 115 kann wie die Verschlusskappe 111 teilweise lichttransparent sein. Die Hochfrequenzlinse 115 kann auch vollständig lichttransparent sein. Durch den Vergrößerungseffekt der Hochfrequenzlinse 115 können die farbige LED 201 und/oder die Laserjustierhilfe auf der Sensorplatine 107 von einem Benutzer besser erkannt werden. Die Hochfrequenzlinse 115 kann als plankonvexe, bikonvexe oder konkav-konvexe Linse geformt sein. Ferner kann die Hochfrequenzlinse 115 als Fresnel-Linse geformt sein.

Gemäß einer Ausführungsform erstreckt sich die Hochfrequenzlinse 115 von der umlaufenden Kappenwandung sphärisch nach innen. In diesem Fall kann die Hochfrequenzlinse 115 als plankonkave, bikonkave oder konvex-konkave Linse geformt sein.

Die Krümmung der Hochfrequenzlinse 115 kann unter Berücksichtigung eines Linsendurchmessers, eines Linsenmaterials, welches insbesondere der Polyamid-Kunststoff sein kann, und der Frequenz der Hochfrequenzstrahlung optimiert werden, um eine optimale Fokussierung des Hochfrequenzsignals 401 auf den Hochfrequenzsensor 109 zu erreichen.

## Patentansprüche

1. Sensoranordnung (100), mit:
einem Gehäuse (101) mit einer umlaufenden Gehäusewandung (103), welche eine Gehäuseöffnung (105) begrenzt;
einer Sensorplatine (107) mit einem Hochfrequenzsensor (109), wobei die Sensorplatine (107) in dem Gehäuse (101) derart angeordnet ist, dass der Hochfrequenzsensor (109) zu der Gehäuseöffnung (105) hin ausgerichtet ist;
einer einteiligen Verschlusskappe (111) zum Verschließen des Gehäuses (101),
wobei die einteilige Verschlusskappe (111) eine umlaufende Kappenwandung (113) und eine Hochfrequenzlinse (115) aufweist,
wobei die Hochfrequenzlinse (115) die umlaufende Kappenwandung (113) stirnseitig abschließt und zu der Gehäuseöffnung (105) hin ausgerichtet ist und
wobei ein Abstand zwischen der Hochfrequenzlinse (115) und dem Hochfrequenzsensor (109) und damit eine Brennweite (128) durch eine seitliche Länge (114) der Kappenwandung (113) vorgegeben ist.

2. Sensoranordnung (100) nach Anspruch 1, wobei die umlaufende Kappenwandung (113) mit einem der Hochfrequenzlinse (115) abgewandten Kappenwandungsrand (117) die Sensorplatine (107) in dem Gehäuse (101) positioniert und fixiert.

3. Sensoranordnung (100) nach Anspruch 2, wobei der abgewandte Kappenwandungsrand (117) voneinander beabstandete, noppenförmig ausgebildete Verlängerungen aufweisen kann.

4. Sensoranordnung (100) nach einem der vorstehenden Ansprüche, wobei das Gehäuse (101) einen umlaufenden Vorsprung (118) für die Aufnahme der Sensorplatine (107) quer zu einer Erstreckungsrichtung des Gehäuses (101) oder parallel zu der Gehäuseöffnung (105) umfasst, und wobei zwischen dem umlaufenden Vorsprung (118) und der Sensorplatine (107) eine elastische Dichtlippe (119), insbesondere ein elastischer Dichtring, angeordnet ist.

5. Sensoranordnung (100) nach einem der vorstehenden Ansprüche, wobei zwischen der umlaufenden Kappenwandung (113) und der Gehäusewandung (103) eine weitere Dichtlippe (121) angeordnet ist.

6. Sensoranordnung (100) nach Anspruch 5, wobei in der umlaufenden Kappenwandung (113) eine umlaufende Nut gebildet ist, und wobei die weitere Dichtlippe (121) in der umlaufenden Nut angeordnet ist, oder wobei in der Gehäusewandung (103) eine umlaufende Nut gebildet ist, und wobei die weitere Dichtlippe (121) in der umlaufenden Nut angeordnet ist.

7. Sensoranordnung (100) nach einem der vorstehenden Ansprüche, wobei die einteilige Verschlusskappe (111) mit dem Gehäuse (101) kraftschlüssig, insbesondere mittels eines Gewindeeingriffs, oder formschlüssig, insbesondere mittels einer Rastverbindung, verbunden ist.

8. Sensoranordnung (100) nach einem der vorstehenden Ansprüche, wobei das Gehäuse (101) hülsenförmig geformt ist, und wobei die Sensorplatine (107) quer zu einer Längsrichtung des Gehäuses (101) angeordnet ist.

9. Sensoranordnung (100) nach einem der vorstehenden Ansprüche, wobei die einteilige Verschlusskappe (111) transluszent oder lichttransparent ist

10. Sensoranordnung (100) nach Anspruch 9, wobei zumindest eine farbige LED (201) zur optischen Anzeige eines Betriebszustandes der Sensoranordnung (100) und/oder eine Laserjustierhilfe bei einer mit der Verschlusskappe (111) verschlossenen Sensoranordnung (100) durch die transluszente oder lichttransparente Verschlusskappe (111) sichtbar ist und vorzugsweise die Sensorplatine (107) die zumindest eine farbige LED (201) und/oder die Laserjustierhilfe aufweist.

11. Sensoranordnung (100) nach einem der vorstehenden Ansprüche, wobei die umlaufende Kappenwandung (113) zumindest teilweise durch einen umlaufenden Wandungskragen (122) umgeben ist, wobei die Gehäusewandung (103) zwischen dem umlaufenden Wandungskragen (122) und der Kappenwandung (113) aufgenommen ist.
